Europäisches Patentamt

European Patent Office

Office européen des brevets

(19)

(11) **EP 0 975 491 B1**

(12) **EUROPÄISCHE PATENTSCHRIFT**

(45) Veröffentlichungstag und Bekanntmachung des Hinweises auf die Patenterteilung:
**24.09.2003 Patentblatt 2003/39**

(21) Anmeldenummer: **98936264.5**

(22) Anmeldetag: **30.06.1998**

(51) Int Cl.⁷: **B60R 16/02**

(86) Internationale Anmeldenummer:
**PCT/DE98/01793**

(87) Internationale Veröffentlichungsnummer:
**WO 99/026810 (03.06.1999 Gazette 1999/22)**

(54) **VERFAHREN UND VORRICHTUNG ZUR ERKENNUNG EINER KIPPTENDENZ EINES FAHRZEUGES**

METHOD AND DEVICE FOR DETECTING MOTOR VEHICLE TILT

PROCEDE ET DISPOSITIF POUR DETECTER LA TENDANCE AU BASCULEMENT D'UN VEHICULE

(84) Benannte Vertragsstaaten:
**DE FR GB SE**

(30) Priorität: **22.11.1997 DE 19751839**

(43) Veröffentlichungstag der Anmeldung:
**02.02.2000 Patentblatt 2000/05**

(73) Patentinhaber: **ROBERT BOSCH GMBH**
**70442 Stuttgart (DE)**

(72) Erfinder: **LEIMBACH, Klaus-Dieter**
**D-71696 Möglingen (DE)**

(56) Entgegenhaltungen:
**EP-A- 0 330 149        DE-A- 4 228 893**
**FR-A- 2 425 342        GB-A- 2 257 403**
**US-A- 4 023 864        US-A- 5 446 658**

**Beschreibung**

Stand der Technik

Die Erfindung betrifft ein Verfahren und eine Vorrichtung zur Erkennung einer Kipptendenz eines Fahrzeuges.

Verfahren und Vorrichtungen zur Erkennung einer Kipptendenz eines Fahrzeuges sind aus dem Stand der Technik in vielerlei Modifikationen bekannt.

Aus der DE 44 16 991 A1 ist ein Verfahren und eine Einrichtung zum Warnen des Fahrers eines Lastkraftwagens vor Kippgefahr bei Kurvenfahrten bekannt. Hierzu wird vor dem Einfahren des Fahrzeuges in eine Kurve der Fahrzeugtyp und die für die Kippgefahr relevanten Zustandsdaten erfaßt und in Abhängigkeit vom Fahrzeugschwerpunkt und Kurvenradius das Kipprisiko bzw. die für letzteres maßgebliche Grenzgeschwindigkeit ermittelt. Es wird ein zur Geschwindigkeitsreduzierung aufforderndes Signal ausgelöst, wenn die aktuelle Fahrgeschwindigkeit des Fahrzeuges Kipprisiko begründet oder ein vorbestimmter Sicherheitsabstand zur Kippgefahr unterschritten wird. Die Fahrgeschwindigkeit des Fahrzeuges, bei der mit Sicherheit keine Kippgefahr besteht, wird ausgehend von einer Kippgleichung ermittelt. In die Kippgleichung gehen u. a. die Fahrzeuggeschwindigkeit, der vom Fahrzeug durchfahrene Kurvenradius, die Höhe des Schwerpunktes des Fahrzeuges über der Fahrbahn, sowie das Ungleichgewicht der Radlasten ein. Die Radlasten werden mit Hilfe von in die Fahrbahn eingelassenen Radlastsensoren ermittelt. Unterschreitet die Fahrgeschwindigkeit des Fahrzeuges einen vorbestimmten Sicherheitsabstand zu der an der Grenze der Kippgefahr liegenden Fahrgeschwindigkeit, so wird ein Signal erzeugt, mit dem der Fahrer des Fahrzeuges vor überhöhter Geschwindigkeit beim Befahren der Kurve gewarnt wird. Das die überhöhte Fahrgeschwindigkeit anzeigende Signal wird solange ausgelöst, bis die jeweils gemessene Fahrgeschwindigkeit auf ein jegliches Kipprisiko ausschließendes Maß reduziert ist. Ferner zeigt die DE 44 16 991 A1, daß der Schlupf der Räder des jeweiligen Fahrzeuges auf der Fahrbahn ermittelt und bei der Beurteilung der Kippgefahr berücksichtigt werden kann.

Die Merkmale der Oberbegriffe der unabhängigen Ansprüche 1 und 10 sind aus der DE 4 416 991 A1 bekannt.

Die Aufgabe der vorliegenden Erfindung besteht darin, das Verfahren zur Erkennung einer Kipptendenz eines Fahrzeuges zu verbessern.

Diese Aufgabe wird durch die Merkmale des Anspruchs 1 und durch die des Anspruchs 10 gelöst.

Vorteile der Erfindung

Mit dem Verfahren wird eine Kipptendenz eines Fahrzeuges um eine in Längsrichtung des Fahrzeuges orientierte Fahrzeugachse erkannt. Hierzu wird eine die Längsdynamik des Fahrzeuges beschreibende Größe ermittelt. Die zur Erkennung einer Kipptendenz des Fahrzeuges um eine in Längsrichtung des Fahrzeuges orientierte Fahrzeugachse verwendete Erkennungsstrategie wird wenigstens in Abhängigkeit der die Längsdynamik des Fahrzeuges beschreibenden Größe aus wenigstens zwei Erkennungsstrategien wobei in beide eine Änderung des dynamischen Rollradius wenigstens eines Rades eingehen ausgewählt, und/oder die zur Erkennung einer Kipptendenz des Fahrzeuges um eine in Längsrichtung des Fahrzeuges orientierte Fahrzeugachse verwendete Erkennungsstrategie in welche eine Änderung des dynamischen Rollradius wenigstens eines Rades eingeht, wird wenigstens in Abhängigkeit der die Längsdynamik des Fahrzeuges beschreibenden Größe an die jeweils worliegende Längsdynamik des Fahrzeuges angepaßt.

An dieser Stelle sei bemerkt, wenn nachfolgend der Begriff "Kipptendenz des Fahrzeuges" verwendet wird, so sei die "Kipptendenz des Fahrzeuges um eine in Längsrichtung des Fahrzeuges orientierte Fahrzeugachse" gemeint. Die Formulierung "eine in Längsrichtung des Fahrzeuges orientierte Fahrzeugachse" ist folgendermaßen zu verstehen: Zum einen kann es sich bei der Fahrzeugachse, um die eine Kipptendenz des Fahrzeuges auftritt, um die eigentliche Fahrzeuglängsachse handeln. Zum anderen kann es sich um eine Fahrzeugachse handeln, die um einen gewissen Winkel gegenüber der eigentlichen Fahrzeuglängsachse verdreht ist. Dabei ist es unerheblich, ob die verdrehte Fahrzeugachse durch den Schwerpunkt des Fahrzeuges geht oder nicht. Der Fall der verdrehten Fahrzeugachse soll auch solch eine Orientierung der Fahrzeugachse zulassen, bei der die Fahrzeugachse entweder einer Diagonalachse des Fahrzeuges oder einer zu dieser parallelen Achse entspricht.

Die Auswahl der Erkennungsstrategie in Abhängigkeit einer die Längsdynamik des Fahrzeuges beschreibenden Größe und/oder die Anpassung der Erkennungsstrategie in Abhängigkeit einer die Längsdynamik des Fahrzeuges beschreibenden Größe an die jeweils vorliegende Längsdynamik des Fahrzeuges begründet gegenüber dem Stand der Technik den Vorteil, daß die Erkennung der Kipptendenz des Fahrzeuges immer optimal an die Fahrzeugsituation adaptiert ist.

Vorteilhafterweise wird das Verfahren zur Erkennung einer Kipptendenz des Fahrzeuges im Rahmen eines Verfahrens zur Stabilisierung des Fahrzeuges eingesetzt. Vorteilhafterweise kann es sich bei einem solchen Verfahren zur Stabilisierung um ein Verfahren zur Umkippvermeidung des Fahrzeuges handeln.

Bei Vorliegen einer Kipptendenz des Fahrzeuges werden zur Stabilisierung des Fahrzeuges, insbesondere zur Vermeidung des Umkippens des Fahrzeuges vorteilhafterweise wenigstens Bremseneingriffe an wenigstens einem Rad und/oder Motoreingriffe und/oder Eingriffe an Fahrwerksaktuatoren durchgeführt.

Vorteilhafterweise wird für wenigstens ein Rad eine die Drehbewegung des entsprechenden Rades beschreibende Größe, insbesondere eine die Raddrehzahl beschreibende Größe, ermittelt. Die die Längsdynamik des Fahrzeuges beschreibende Größe, die insbesondere dem für wenigstens ein Rad ermittelten an diesem Rad vorherrschenden Antriebs- und/oder Bremsschlupf entspricht, wird vorteilhafterweise wenigstens in Abhängigkeit der für wenigstens ein Rad ermittelten Größe, die die Drehbewegung des entsprechenden Rades beschreibt, ermittelt. Ein weiterer Vorteil besteht darin, daß die Erkennung einer Kipptendenz des Fahrzeuges wenigstens in Abhängigkeit der für wenigstens ein Rad ermittelten Größe, die die Drehbewegung des entsprechenden Rades beschreibt, durchgeführt wird.

Vorteilhafterweise wird der Betrag der Größe, die die Längsdynamik des Fahrzeuges beschreibt, mit wenigstens einem entsprechenden Schwellenwert verglichen. In Abhängigkeit dieses Vergleichs wird die verwendete Erkennungsstrategie ausgewählt und/oder angepaßt.

Für wenigstens ein Rad wird eine das Radverhalten beschreibende Größe, insbesondere eine den Durchmesser oder den Radius des jeweiligen Rades beschreibende Größe, ermittelt. Vorteilhafterweise wird wenigstens eine der wenigstens zwei Erkennungsstrategien wenigstens in Abhängigkeit der für wenigstens ein Rad ermittelten Größe, die das Radverhalten des jeweiligen Rades beschreibt, durchgeführt. Es hat sich als vorteilhaft erwiesen, wenn die das Radverhalten des Rades beschreibende Größe wenigstens in Abhängigkeit einer die Raddrehzahl des entsprechenden Rades beschreibenden Größe, einer die Fahrzeuggeschwindigkeit beschreibenden Größe, einer die Querdynamik des Fahrzeugs beschreibenden Größe und einer die Geometrie des Fahrzeuges beschreibenden Größe ermittelt wird.

Der Betrag der Größe, die die Längsdynamik des Fahrzeuges beschreibt, wird mit wenigstens einem entsprechenden Schwellenwert verglichen. Vorteilhafterweise wird eine erste der wenigstens zwei Erkennungsstrategien dann ausgeführt, wenn der Betrag der Größe kleiner als der wenigstens eine entsprechende Schwellenwert ist. In diesem Fall wird die erste Erkennungsstrategie wenigstens in Abhängigkeit von der für das wenigstens eine Rad im aktuellen Zeitschritt ermittelten Größe, die das Radverhalten beschreibt, durchgeführt. Vorteilhafterweise wird eine zweite der wenigstens zwei Erkennungsstrategien dann ausgeführt wird, wenn der Betrag der Größe größer als der wenigstens eine entsprechende Schwellenwert ist. In diesem Fall wird die zweite Erkennungsstrategie wenigstens in Abhängigkeit von der für das wenigstens eine Rad in einem vorigen Zeitschritt ermittelten Größe, die das Radverhalten beschreibt, durchgeführt.

Gemäß einer ersten der wenigstens zwei Erkennungsstrategien werden verschiedene Abfragen durchgeführt. Vorteilhafterweise liegt für das Fahrzeug eine Kipptendenz um eine in Längsrichtung des Fahrzeuges orientierte Fahrzeugachse dann vor:

- Wenn für wenigstens ein Rad der Wert der Größe, die das Radverhalten quantitativ beschreibt, größer als ein erster Schwellenwert ist. Oder wenn für wenigstens ein Rad der Wert der Größe, die das Radverhalten quantitativ beschreibt, kleiner als ein zweiter Schwellenwert ist.

- Wenn für wenigstens ein Rad der Betrag einer Differenz, die aus dem Wert der Größe, die das Radverhalten quantitativ beschreibt und einem Vergleichswert gebildet wird, größer als ein entsprechender Schwellenwert ist.

- Wenn für wenigstens ein Rad der Betrag einer Größe, die den zeitlichen Verlauf der das Radverhalten quantitativ beschreibenden Größe beschreibt, kleiner als ein entsprechender Schwellenwert ist.

- Wenn der Betrag einer der Neigungswinkel einer Radachse beschreibenden Größe größer als ein entsprechender Schwellenwert ist. Dabei wird die den Neigungswinkel einer Radachse beschreibende Größe vorteilhafterweise in Abhängigkeit der für die Räder der entsprechenden Radachse jeweils ermittelten Größen, die das Radverhalten quantitativ beschreiben, ermittelt.

Gemäß einer zweiten der wenigstens zwei Erkennungsstrategien liegt eine Kipptendenz des Fahrzeuges dann vor, wenn der Betrag einer Differenz, die aus einer die Fahrzeuggeschwindigkeit beschreibenden Größe und einem Geschwindigkeitsgrenzwert gebildet wird, kleiner als ein entsprechender Schwellenwert ist. Der Geschwindigkeitsgrenzwert wird vorteilhafterweise wenigstens in Abhängigkeit einer die Schwerpunktshöhe des Fahrzeuges beschreibenden Größe ermittelt, wobei diese wenigstens in Abhängigkeit von der für wenigstens ein Rad ermittelten Größe, die das Radverhalten quantitativ beschreibt, ermittelt wird.

Von Vorteil hat sich erwiesen, daß die Erkennung, ob eine Kipptendenz des Fahrzeuges vorliegt, dann ausgeführt wird, wenn der Betrag einer die Querdynamik des Fahrzeuges repräsentierenden Größe, insbesondere der einer die Querbeschleunigung und/oder der einer die Gierrate des Fahrzeuges beschreibenden Größe, größer als ein entsprechender Schwellenwert ist. Dadurch wird das erfindungsgemäße Verfahren lediglich in solchen querdynamischen Fahrzeugsituationen aktiviert, in denen mit einer Kipptendenz des Fahrzeuges zu rechnen ist.

Zur Durchführung der verwendeten Erkennungsstrategie sind Eingangsgrößen, insbesondere das Radverhalten beschreibende Größen, erforderlich. Dabei wird die verwendete Erkennungsstrategie mit Hilfe von Plausibilitätsabfragen durchgeführt. Vorteilhafterweise wird die verwendete Erkennungsstrategie an die jeweils vorliegende Längsdynamik des Fahrzeuges dadurch angepaßt, daß als Eingangsgrößen in Abhängigkeit der vorliegenden Längsdynamik des Fahrzeuges verschiedene Eingangsgrößen auswählbar sind, und/oder daß die in der verwendeten Erkennungsstrategie durchgeführten Plausibilitätsabfragen in Abhängigkeit der vorliegenden Längsdynamik des Fahrzeuges veränderbar sind.

Weitere Vorteile sowie vorteilhafte Ausgestaltungen können den Unteransprüchen, der Zeichnung sowie der Beschreibung der Ausführungsbeispiele entnommen werden.

Zeichnung

Die Zeichnung besteht aus den Figuren 1 bis 4. Die Figuren 1a und 1b zeigen verschiedene Straßenfahrzeuge, bei denen das erfindungsgemäße Verfahren eingesetzt wird. Die Figur 2 zeigt in einer Übersichtsanordnung die erfindungsgemäße Vorrichtung zur Durchführung des erfindungsgemäßen Verfahrens. In Figur 3 (bestehend aus den Teilfiguren 3a und 3b) sind mit Hilfe eines Ablaufdiagrammes die zur Durchführung des erfindungsgemäßen Verfahrens wesentlichen Schritte dargestellt. Figur 4 stellt in einer schematischen Darstellung den physikalischen Sachverhalt für ein Straßenfahrzeug bei Kurvenfahrt dar.

Es sei darauf hingewiesen, daß Blöcke mit derselben Bezeichnung in unterschiedlichen Figuren die selbe Funktion haben.

Ausführungsbeispiele

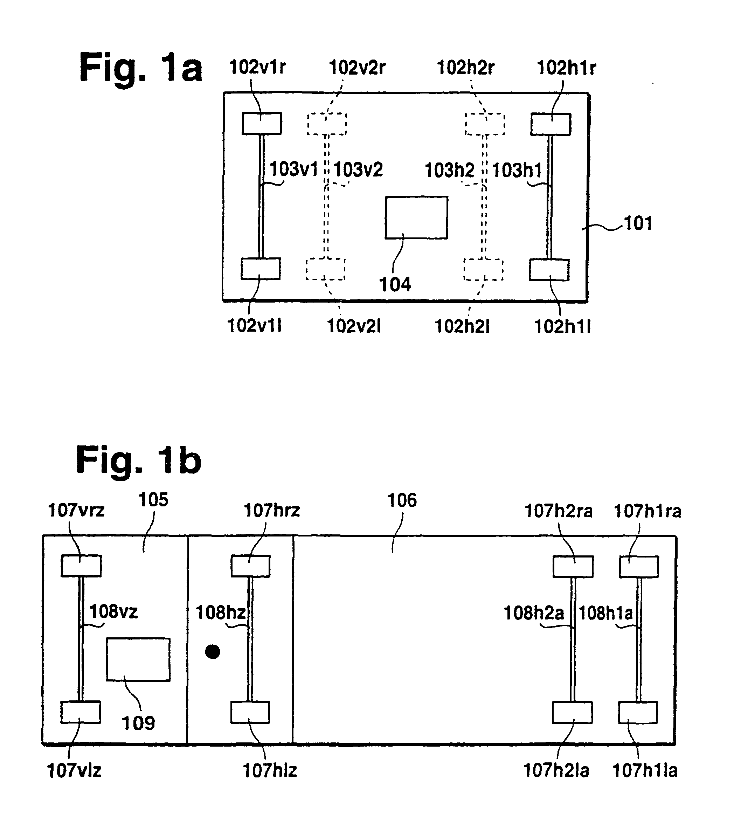

Zunächst soll auf die Figuren 1a und 1b eingegangen werden, die verschiedene Straßenfahrzeuge darstellen, bei denen das erfindungsgemäße Verfahren zum Einsatz kommen kann.

In Figur 1a ist ein einteiliges Fahrzeug 101 dargestellt. Bei diesem Fahrzeug kann es sich sowohl um einen Personenkraftwagen als auch um einen Nutzkraftwagen handeln. Bei dem in Figur 1a dargestellten einteiligen Fahrzeug 101 soll es sich um ein Fahrzeug mit wenigstens zwei Radachsen handeln, was durch die teilweise gestrichelte Darstellung angedeutet ist. Die Radachsen des Fahrzeuges 101 sind mit 103ix bezeichnet. Dabei gibt der Index i an, ob es sich um eine Vorderachse (v) oder um eine Hinterachse (h) handelt. Durch den Index x wird bei Fahrzeugen mit mehr als zwei Achsen angegeben, um welche der Vorder- bzw. Hinterachsen es sich handelt. Dabei gilt folgende Zuordnung: Der Vorderachse bzw. der Hinterachse, die der Fahrzeugberandung am nächsten ist, ist jeweils der Index x mit dem kleinsten Wert zugeordnet. Je weiter die jeweilige Radachse von der Fahrzeugberandung entfernt ist, desto größer ist der Wert des zugehörigen Index x. Den Radachsen 103ix sind die Räder 102ixj zugeordnet. Die Bedeutung der Indizes i bzw. x entspricht der vorstehend beschriebenen. Mit dem Index j wird angezeigt, ob sich das Rad auf der rechten (r) bzw. auf der linken (1) Fahrzeugseite befindet. Bei der Darstellung der Räder 102ixj wurde auf die Unterscheidung zwischen Einzelrädern bzw. Zwillingsrädern verzichtet. Ferner enthält das Fahrzeug 101 ein Steuergerät 104, in welchem die erfindungsgemäße Vorrichtung zur Durchführung des erfindungsgemäßen Verfahrens implementiert ist.

Zur Verdeutlichung der in Figur 1a gewählten Darstellung sei beispielhaft ausgeführt: Ein zweiachsiges Fahrzeug enthält eine Vorderachse 103v1 mit den ihr zugeordneten Rädern 102v1r bzw. 102v1l sowie eine Hinterachse 103h1 mit den ihr zugeordneten Rädern 102h1r bzw. 102h1l. Ein dreiachsiges Fahrzeug weist im Normalfall eine Vorderachse 103v1 mit den Rädern 102v1r bzw. 102v1l, sowie eine erste Hinterachse 103h1 mit den Rädern 102h1r bzw. 102h1l sowie eine zweite Hinterachse 103h2 mit den Rädern 102h2r bzw. 102h21 auf.

In Figur 1b ist eine Fahrzeugkombination, bestehend aus einer Zugmaschine 105 und einem Auflieger 106 dargestellt. Die gewählte Darstellung soll keine Einschränkung darstellen, denkbar ist auch eine Fahrzeugkombination, die aus einer Zugmaschine und einem Deichselanhänger besteht. Die Zugmaschine 105 soll die Radachsen 108iz aufweisen. Den Radachsen 108iz sind die entsprechenden Räder 107ijz zugeordnet. Die Bedeutung der Indizes i bzw. j entspricht der bereits im Zusammenhang mit Figur 1a beschriebenen. Der Index z gibt an, daß es sich um Radachsen bzw. Räder der Zugmaschine handelt. Ferner weist die Zugmaschine 105 ein Steuergerät 109 auf, mit dem eine Kipptendenz der Zugmaschine 105 und/oder eine Kipptendenz des Aufliegers 106 und/oder eine Kipptendenz der gesamten Fahrzeugkombination um eine in Längsrichtung orientierte Fahrzeugachse erkannt wird. Der Auflieger 106 soll zwei Radachsen 108ixa enthalten. Den beiden Radachsen 108ixa sind in entsprechender Weise die Räder 107ixja zugewiesen. Die Bedeutung der Indizes i bzw. x bzw. j entspricht der bereits im Zusammenhang mit Figur 1a dargestellten. Der Index a gibt an, daß es sich um Komponenten des Aufliegers 106 handelt. Die in Figur 1b dargestellte Anzahl von Radachsen für die Zugmaschine 105 bzw. für den Auflieger 106 soll keine Einschränkung darstellen. Das Steuergerät 109 kann anstelle in der Zugmaschine 105 auch im Auflieger 106 angeordnet sein. Ferner ist es denkbar sowohl das Zugfahrzeug 105 als auch den Auflieger 106 mit einem eigenen Steuergerät auszustatten.

Die in den Figuren 1a und 1b gewählte Kennzeichnung durch die Indizes a, i, j, x sowie z ist für sämtliche Größen bzw. Komponenten, bei denen sie Verwendung findet, entsprechend.

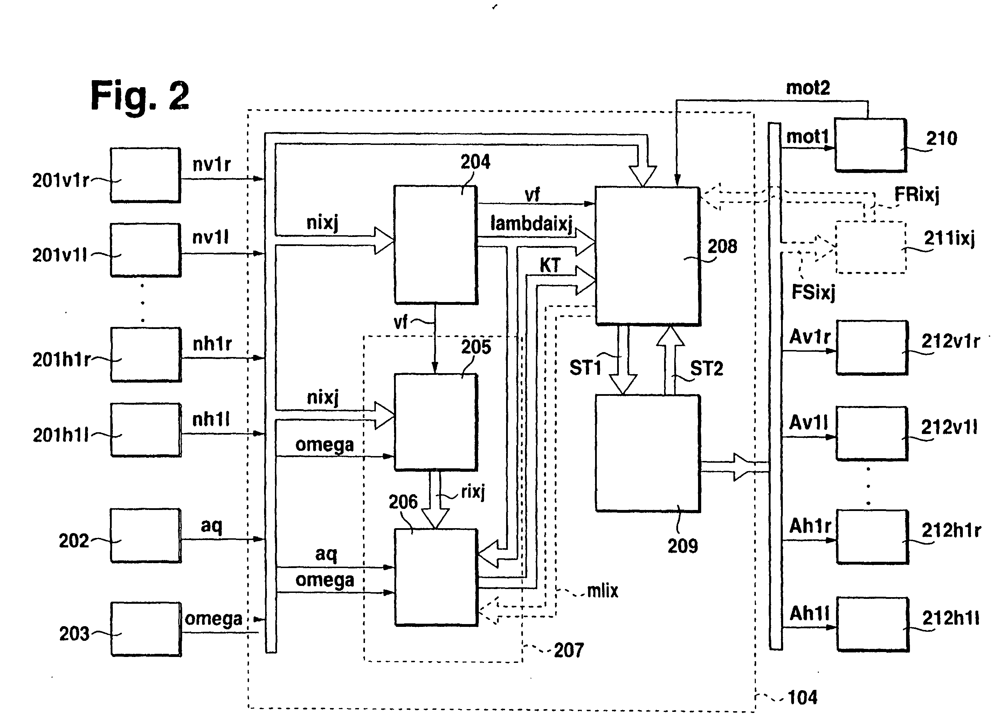

Mit Hilfe von Figur 2 soll die erfindungswesentliche Vorrichtung beschrieben werden. Bei dem zugrundeliegenden Fahrzeug handelt es sich um ein einteiliges Fahrzeug, wie es in Figur 1a dargestellt ist. Dies soll keine Einschränkung darstellen, das erfindungsgemäße Verfahren ist in entsprechender Weise auch für eine Fahrzeugkombination einsetzbar.

Es sei angenommen, daß das einteilige Fahrzeug wenigstens zwei Radachsen 103ix aufweist. Bei diesen beiden Radachsen soll es sich um die Vorderachse 103v1 mit den Rädern 102v1r bzw. 102v1l sowie um die Hinterachse 103h1 mit den Rädern 102h1r bzw. 102h1l handeln. Die zu diesen Rädern gehörenden Raddrehzahlsensoren 201v1r, 201v1l, 201h1r bzw. 201h1l, mit denen eine die Drehbewegung des entsprechenden Rades beschreibende Größe, insbesondere eine die Raddrehzahl des entsprechenden Rades beschreibende Größe, ermittelt wird, sind in Figur 2 dargestellt. Je nach Anzahl der Radachsen des einteiligen Fahrzeuges können, wie in Figur 2 angedeutet, weitere Raddrehzahlsensoren 201ixj berücksichtigt werden. Mit den Raddrehzahlsensoren 201ixj werden die Größen nixj ermittelt, die jeweils die Raddrehzahl des entsprechenden Rades 102ixj beschreiben. Die Größen nixj werden Blöcken 204, 205 sowie 208 zugeführt.

Ferner sei angenommen, daß das Fahrzeug 101 einen Querbeschleunigungssensor 202 sowie einen Gierratensensor 203 enthält. An dieser Stelle sei bemerkt, daß die Verwendung des Querbeschleunigungssensors 202 bzw. die des Gierratensensors 203 keine Einschränkung darstellen soll. Beispielsweise kann anstelle der Ermittlung einer die Querbeschleunigung beschreibenden Größe aq mit Hilfe eines Querbeschleunigungssensors, diese Größe auch ausgehend von den Größen nixj ermittelt werden. Ebenso kann anstelle der Ermittlung einer die Gierrate des Fahrzeuges beschreibenden Größe omega mit Hilfe eines Gierratensensors 203, diese Größe ebenfalls ausgehend von den Größen nixj ermittelt werden.

Die die Querbeschleunigung des Fahrzeugs beschreibende Größe aq, die mit Hilfe des Querbeschleunigungssensors 202 ermittelt wird, wird sowohl dem Block 208 als auch einem Block 206 zugeführt. Die die Gierrate des Fahrzeuges beschreibende Größe omega, die mit Hilfe des Gierratensensors 203 ermittelt wird, wird den Blöcken 208, 205 sowie 206 zugeführt.

Im Block 204 wird in bekannter Weise aus den Größen nixj eine die Fahrzeuggeschwindigkeit beschreibende Größe vf ermittelt. Diese Größe vf wird ausgehend vom Block 204 den Blöken 205 bzw. 208 zugeführt. Ferner werden im Block 204 ausgehend von den Größen nixj, sowie der Größe vf, in bekannter Weise Größen lambdaixj, die die Längsdynamik des Fahrzeuges beschreibende Größen darstellen, ermittelt, die den Antriebs- und/oder Bremsschlupf der Räder beschreiben. Diese Größen lambdaixj werden ausgehend vom Block 204 sowohl dem Block 206 als auch dem Block 208 zugeführt.

Im Block 205 wird ausgehend von der Größe vf, den Größen nixj sowie der Größe omega die Größen rixj ermittelt, die das Radverhalten der Räder quantitativ beschreiben. Diese Größen rixj sind von der auf das jeweilige Rad wirkenden Radlast abhängig. Insbesondere handelt es sich bei den Größen rixj um die dynamischen Rollradien der Räder, die mit Hilfe der Gleichung

$$rixj = \frac{vf \pm a \cdot omega}{nixj}$$

ermittelt werden, wobei die in der Gleichung enthaltene Größe a die halbe Spurweite des Fahrzeuges beschreibt. Für die kurvenäußeren Räder wird das Pluszeichen verwendet, für die kurveninneren Räder das Minuszeichen.

An dieser Stelle sei bemerkt, daß die in obiger Gleichung verwendete Größe omega, die die Gierrate des Fahrzeuges beschreibt, auch durch einen aus der Querbeschleunigung des Fahrzeuges und der Fahrzeuggeschwindigkeit hergeleiteten Ausdruck ersetzt werden kann. In diesem Fall müßte dem Block 205 anstelle der Größe omega die Größe aq zugeführt werden.

Die das Radverhalten quantitativ beschreibenden Größen rixj, die den dynamischen Rollradien der Räder entsprechen, werden ausgehend vom Block 205 dem Block 206 zugeführt. Da es sich bei den das Radverhalten quantitativ beschreibenden Größen rixj um die dynamischen Rollradien handelt, beschreiben diese Größen den Durchmesser bzw. entsprechend den Radius den jeweiligen Rades.

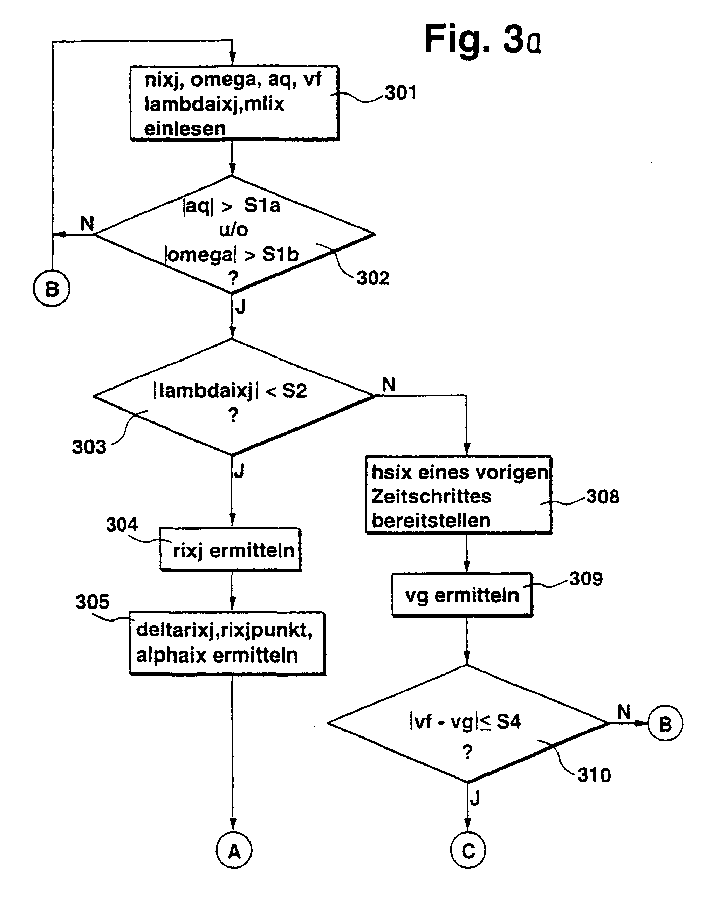

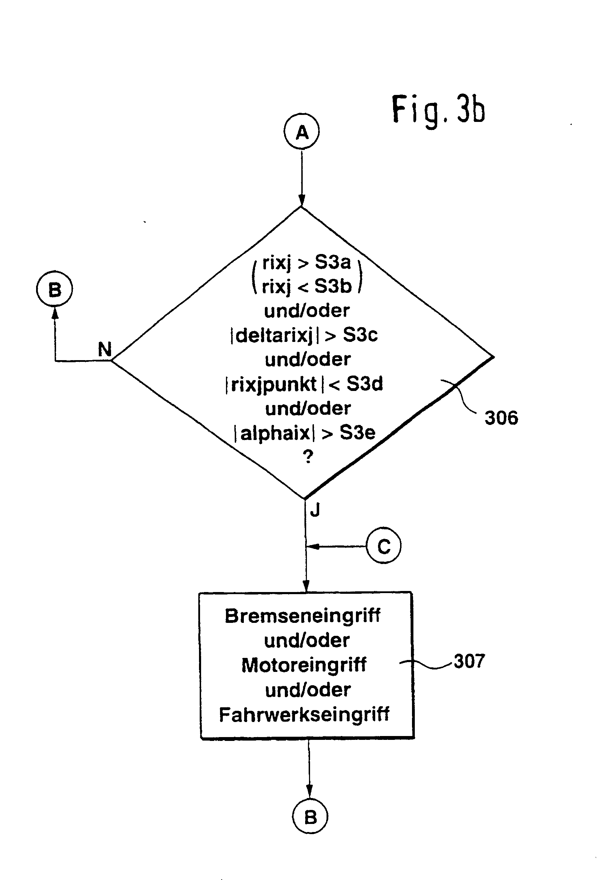

Im Block 206 wird ausgehend von den ihm zugeführten Größen lambdaixj, rixj, aq, omega sowie den alternativ ihm zugeführten Größen mlix, die jeweils die achsbezogene Last beschreiben, die Erkennung, ob eine Kipptendenz des Fahrzeuges um eine Längsrichtung des Fahrzeuges orientierte Fahrzeugachse vorliegt, durchgeführt. Hierzu sind im Block 206 wenigstens zwei unterschiedliche Erkennungsstrategien implementiert, auf die im Zusammenhang mit Figur 3 noch ausführlich eingegangen wird.

Im Block 206 werden zur Erkennung, ob für das Fahrzeug eine Kipptendenz vorliegt, ausgehend von dem ihm zugeführten Größen verschiedene Abfragen, die zu mehreren Erkennungsstrategien zusammengefaßt sind, durchgeführt. Wird im Block 206 erkannt, daß für das Fahrzeug eine Kipptendenz um eine in Längsrichtung des Fahrzeuges orientierte Fahrzeugachse vorliegt, so wird eine Größe KT erzeugt, die ausgehend vom Block 206 dem Block 208 zugeführt wird. Durch diese Größe KT wird dem Regler bzw. Fahrzeugregler 208 mitgeteilt, ob eine Kipptendenz des Fahrzeuges vorliegt oder nicht. In Figur 2 sind die beiden im Steuergerät enthaltenen erfindungswesentlichen Komponenten 205 bzw. 206 zu einem Block 207 zusammengefaßt.

Mit 208 ist der im Steuergerät 104 implementierte Regler bzw. Fahrzeugregler 208 bezeichnet. Bei dem Regler 208 handelt es sich beispielsweise um einen Regler, der in seiner Grundfunktion eine die Fahrdynamik des Fahrzeuges beschreibende Größe, beispielsweise eine von der Querbeschleunigung und/oder der Gierrate des Fahrzeuges abhängige Größe, durch Eingriffe in die Radbremsen und/oder in den Motor regelt. Solch ein Regler ist beispielsweise aus der in der Automobiltechnischen Zeitschrift (ATZ) 16, 1994, Heft 11, auf den Seiten 674 bis 689 erschienen Veröffentlichung "FDR - die Fahrdynamikregelung von Bosch" bekannt. Die im Block 208 in ihrer Grundfunktion stattfindende Regelung basiert in bekannter Weise auf den dem Block 208 zugeführten Größen nixj, aq, omega, vf, lambdaixj, einer Größe mot2, die beispielsweise die Motordrehzahl des Motors 210 beschreibt und die ausgehend von dem Motor 210 dem Block 208 zugeführt wird, sowie Größen ST2, die ausgehend von einem Block 209, welche die Ansteuerlogik für die im Fahrzeug enthaltenen Aktuatoren darstellt, dem Block 208 zugeführt werden. An dieser Stelle sei bemerkt, daß die vorstehend für die Grundfunktion des Reglers beschriebene Regelung, keine Einschränkung darstellen soll. Alternativ zu dieser Regelung kann im Regler 208 als Grundfunktion auch eine Bremsschlupfregelung, die in die Radbremsen eingreift und/oder eine Antriebsschlupfregelung, die in die Radbremsen und/oder in den Motor eingreift, implementiert sein.

Zusätzlich zu der im Block 208 in der Grundfunktion implementierten Regelung ist im Regler 208 eine Umkippvermeidung implementiert. Die Umkippvermeidung wird im wesentlichen ausgehend von den Größen KT, die im Block 206 im Rahmen der Umkipperkennung erzeugt werden, ausgeführt. Mit den Größen KT kann dem Regler 208 zum einen mitgeteilt werden, daß eine Kipptendenz des Fahrzeuges um eine in Längsrichtung des Fahrzeuges orientierte Fahrzeugachse vorliegt, außerdem kann dem Regler 208 mitgeteilt werden, wie stark diese Kipptendenz ist. Außerdem können die Größen KT Informationen darüber enthalten, wie bzw. über welche Räder das Fahrzeug zu kippen droht.

Für eine der Erkennungsstrategien, die im Block 206 durchgeführt wird, sind im Block 206 die achsbezogenen Radlasten mlix erforderlich. Diese werden im Regler 208 beispielsweise in bekannter Weise aus den Raddrehzahlen ermittelt, und dem Block 206 zugeführt.

Der Regler 208 erzeugt Größen ST1, die der Ansteuerlogik 209, mit der die dem Fahrzeug zugeordneten Aktuatoren angesteuert werden, zugeführt werden. Mit den Größen ST1 wird der Ansteuerlogik 209 mitgeteilt, welche Aktuatoren wie angesteuert werden sollen. Dabei werden die Größen ST1 sowohl für die Regelung der Grundfunktion als auch für die Umkippvermeidung ermittelt. Bzgl. der Erzeugung der Größen ST1 gemäß der für die Grundfunktion implementierten Regelung wird auf die vorstehend aufgeführte Veröffentlichung "FDR - die Fahrdynamikregelung von Bosch" verwiesen. Liegt für das Fahrzeug eine Kipptendenz vor, so werden die Größen ST1 entsprechend modifiziert.

Um ein Umkippen des Fahrzeuges um eine in Längsrichtung des Fahrzeuges orientierte Fahrzeugachse zu vermeiden, sind beispielsweise folgende Eingriffe in die Aktuatoren des Fahrzeuges denkbar: Zum einen kann durch Bremsen bzw. durch Zurücknahme des Motormomentes eine Verminderung der Fahrzeuggeschwindigkeit erreicht werden. Zum anderen kann durch radindividuelle Bremseingriffe gezielt dem Umkippen des Fahrzeuges entgegengewirkt werden. Zudem kann durch Eingriffe in die dem Fahrzeug zugeordneten Fahrwerksaktuatoren eine Wankbewegung des Fahrzeuges begrenzt werden.

Im Block 209, der Ansteuerlogik, werden die vom Regler 208 erzeugten Größen ST1 in Ansteuersignale für den Motor 210 sowie in Ansteuersignale für die Aktuatoren des Fahrzeuges umgesetzt. Bei den Aktuatoren handelt es sich beispielsweise um Fahrwerksaktuatoren 21lixj, mit denen das Verhalten des Fahrwerkes beeinflußbar ist, sowie um Aktuatoren 212ixj, mit denen an den entsprechenden Rädern eine Bremskraft erzeugbar ist. Zur Ansteuerung des Motors 210 erzeugt die Ansteuerlogik ein Signal motl, mit dem beispielsweise die Drosselklappenstellung des Motors beeinflußbar ist. Zur Ansteuerung der Fahrwerksaktuatoren 211ixj erzeugt die Ansteuerlogik 209 Signale Fsixj, mit denen die von den Fahrwerksaktuatoren 211ixj realisierte Dämpfung bzw. Steifigkeit beeinflußbar ist. Zur Ansteuerung der Aktuatoren 212ixj, die insbesondere als Bremsen ausgebildet sind, erzeugt die Ansteuerlogik 209 Signale Aixj, mit denen die von den Aktuatoren 212ixj an den entsprechenden Rädern erzeugten Bremskräfte beeinflußbar sind. Die Ansteuerlogik 209 erzeugt Größen ST2, die dem Regler 208 zugeführt werden, und die eine Information über die Ansteuerung der einzelnen Aktuatoren enthalten.

Mit den Fahrwerksaktuatoren 211ixj wird das Fahrwerk des Fahrzeuges beeinflußt. Damit der Regler den Istzustand der Fahrwerksaktuatoren 211ixj kennt, werden ausgehend von den Fahrwerksaktuatoren 211ixj dem Regler 208 Signale Frixj zugeführt.

An dieser Stelle sei bemerkt, daß neben den in Figur 2 dargestellten Aktuatoren auch der Einsatz von sogenannten Retardern denkbar ist.

Bei der in Figur 2 zum Einsatz kommenden Bremsanlage kann es sich um eine hydraulische oder pneumatische oder elektrohydraulische oder elektropneumatische Bremsanlage handeln.

Mit Hilfe des in Figur 3 dargestellten Ablaufdiagrammes soll der Ablauf des erfindungsgemäßen Verfahrens dargestellt werden. Das in Figur 3 dargestellte Ablaufdiagramm beschreibt den Ablauf des erfindungsgemäßen Verfahrens, wie es für ein in Figur 1a dargestelltes einteiliges Fahrzeug abläuft, dem die erfindungsgemäße Vorrichtung nach Figur 2 zugrundeliegt. Das in Figur 3 dargestellte erfindungsgemäße Verfahren läuft im wesentlichen in den beiden zum Block 207 zusammengefaßten Blöcken 205 bzw. 206 ab.

Das erfindungsgemäße Verfahren beginnt mit einem Schritt 301, in welchem die Größen nixj, omega, aqa, vf, lambdaixj sowie mlix eingelesen werden. Im Anschluß an den Schritt 301 wird ein Schritt 302 ausgeführt An dieser Stelle sei die Bedeutung des in Figur 3 verwendeten Zeichens "u/o" erläutert. Das Zeichen "u/o" soll die Abkürzung für die Verknüpfung "und/oder" darstellen.

Mit der im Schritt 302 stattfindenden Abfrage wird ermittelt, ob ein Fahrzustand vorliegt, bei dem eine Kipptendenz des Fahrzeuges um eine in Längsrichtung des Fahrzeuges orientierte Fahrzeugachse auftreten kann. Hierzu wird im Schritt 302 ermittelt, ob der Betrag der die Querbeschleunigung des Fahrzeuges beschreibenden Größe aq größer als ein erster Schwellenwert S1a ist und/oder ob der Betrag der die Gierrate des Fahrzeuges beschreibende Größe omega größer als ein zweiter Schwellenwert S1b ist.

Die alternative Verknüpfung der beiden Teilabfragen im Schritt 302 hat folgende Gründe: Zum einen kann der Fall vorliegen, daß dem Block 206 entweder die die Querbeschleunigung beschreibende Größe aq oder die die Gierrate beschreibende Größe omega zugeführt werden. In diesem Fall kann lediglich eine der beiden Teilabfragen ausgeführt werden. Andererseits kann der Fall vorliegen, daß dem Block 206 beide Größen zugeführt werden. In diesem Fall kann entweder eine der beiden Teilabfragen ausgeführt werden oder können, um die Aussage sicherer zu machen, beide Teilabfragen gleichzeitig ausgeführt werden. Ist im Schritt 302 wenigstens eine der beiden Teilabfragen erfüllt, so wird im Anschluß an den Schritt 302 ein Schritt 303 ausgeführt. Ist dagegen im Schritt 302 keine der beiden Teilabfragen erfüllt, so wird anschließend an den Schritt 302 erneut der Schritt 301 ausgeführt.

Im Schritt 303 wird der Betrag der den Antriebs- und/oder Bremsschlupf beschreibende Größe lambdaixj mit einem Schwellenwert S2 verglichen. Die im Schritt 303 stattfindende Abfrage wird aus folgendem Grund durchgeführt: Die im Schritt 304 stattfindende Ermittlung der das Radverhalten quantitativ beschreibenden Größen rixj, die die dynamischen Rollradien der Räder darstellen, kann nur durchgeführt werden, wenn die Räder quasi schlupffrei sind, d.h., wenn der Antriebsund/oder Bremsschlupf der Räder kleiner als ein vorgegebener Schwellenwert ist. Ist dies nicht erfüllt, so können die das Radverhalten quantitativ beschreibenden Größen rixj nicht fehlerfrei ermittelt werden.

Wird im Schritt 303 festgestellt, daß der Betrag der Größe lambdaixj kleiner als der entsprechende Schwellenwert ist, so wird im Anschluß an den Schritt 303 ein Schritt 304 ausgeführt, mit dem eine erste Erkennungsstrategie, die aus den Schritten 304 bis 306 besteht, eingeleitet wird. Wird dagegen im Schritt 303 festgestellt, daß der Betrag der Größe lambdaixj größer als der entsprechende Schwellenwert S2 ist, so wird im Anschluß an den Schritt 303 ein Schritt 308 ausgeführt, mit dem eine zweite Erkennungsstrategie, die aus den Schritten 308 bis 310 besteht, eingeleitet wird.

Im vorliegenden Ausführungsbeispiel wird in Abhängigkeit des im Schritt 303 stattfindenden Vergleichs, eine der zwei unterschiedlichen Erkennungsstrategien ausgewählt. Es ist aber auch ein Ausführungsbeispiel denkbar, bei dem keine Auswahl von Erkennungsstrategien stattfindet, sondern bei dem wenigstens in Abhängigkeit des im Schritt 303 stattfindenden Vergleichs, d.h. wenigstens in Abhängigkeit der die Längsdynamik des Fahrzeuges beschreibenden Größe lambdaixj, die Erkennungsstrategie der jeweils vorliegenden Längsdynamik des Fahrzeuges angepaßt wird. Eine Anpassung der Erkennungsstrategie kann beispielsweise dadurch erreicht werden, daß die Eingangsgrößen, die zur Durchführung der Erkennungsstrategie erforderlich sind, in Abhängigkeit der vorliegenden Längsdynamik aus verschiedenen Eingangsgrößen ausgewählt werden. Alternativ ist bei Erkennungsstrategien, die aus Plausibilitätsabfragen aufgebaut sind, denkbar, die in der Erkennungsstrategie durchgeführten Plausibilitätsabfragen in Abhängigkeit der vorliegenden Längsdynamik des Fahrzeuges auszuwählen bzw. zu verändern.

An dieser Stelle sei bemerkt, daß die in den einzelnen Schritten verwendete indizierte Darstellung, als Beispiel sei hier lambdaixj genannt, bedeuten soll, daß die einzelnen Schritte für ein beliebiges einzelnes Rad oder für eine beliebige Anzahl von Rädern oder für alle Räder des Fahrzeuges ausgeführt werden sollen.

Im Schritt 304 werden mit Hilfe der o.a. Gleichung die das Radverhalten quantitativ beschreibenden Größen ermittelt. Diese Größen können nur ermittelt werden, wenn kein allzu großer Radschlupf vorliegt, d. h., diese Größen können nur ermittelt werden, wenn die Radgeschwindigkeiten und die Fahrzeuggeschwindigkeit nicht allzusehr voneinander abweichen. Weichen die Radgeschwindigkeiten und die Fahrzeuggeschwindigkeit zu sehr voneinander ab, wie es beispielsweise der Fall ist, wenn einzelne Räder starken Schlupf aufweisen, so kann es aufgrund der in diesem Fahrzeugzustand ermittelten Größen rixj, im Schritt 306 zu Fehlentscheidungen kommen. Anschließend an den Schritt 304 wird ein Schritt 305 ausgeführt. Im Schritt 305 werden die Größen deltarixj, rixjpunkt sowie alphaix ermittelt. Bei der Größe deltarixj handelt es sich um eine Differenz, die aus dem aktuellen Wert, der das Radverhalten quantitativ beschreibenden Größe rixj und einem Wert, der das Radverhalten quantitativ beschreibenden Größe, der bei einer Geradeausfahrt ermittelt wurde, gebildet wird.

Der Wert, der der das Radverhalten quantitativ beschreibenden Größe bei Geradeausfahrt entspricht, wird von Zeit zu Zeit in geeigneten Fahrsituationen ermittelt und in einem entsprechenden Speicher zwischengespeichert.

Bei der Größe rixjpunkt handelt es sich um eine Größe, die den zeitlichen Verlauf der das Radverhalten quantitativ beschreibenden Größe rixj darstellt. Insbesondere entspricht die Größe rixjpunkt der zeitlichen Ableitung der Größe rixj. Bei der Größe $\alpha$ handelt es sich um eine den Neigungswinkel einer Radachse beschreibende Größe. Die Größe alphaix wird gemäß der Gleichung

$$\text{alpahix} = \left| \frac{\text{rixl} - \text{rixr}}{2 \cdot a} \right|$$

ermittelt. Wie diese Gleichung zeigt, wird ausgehend, von den für die beiden Räder der Radachse ermittelten Größen, die jeweils das Radverhalten quantitativ beschreiben, eine die Neigung der Radachse beschreibende Größe ermittelt. Außerdem geht in die Größe alphaix die Spurweite 2a des Fahrzeuges ein. Obige Gleichung für den Neigungswinkel alphaix stellt eine Näherung dar, die für kleine Winkel alphaix gilt.

Im Anschluß an den Schritt 305 wird ein Schritt 306 ausgeführt. Mit Hilfe des Schrittes 306 wird erkannt, ob für das Fahrzeug eine Kipptendenz um eine in Längsrichtung des Fahrzeuges orientierte Fahrzeugachse besteht. Die im Schritt 306 aufgeführten Einzelabfragen werden unter Verwendung der im Schritt 305 ermittelten Größen, die wiederum in Abhängigkeit des im Schritt 304 ermittelten aktuellen Wertes der das Radverhalten quantitativ beschreibenden Größe rixj ermittelt werden, ausgeführt. Durch die im Schritt 306 gewählte Darstellung soll folgendes zum Ausdruck gebracht werden: Entweder kann das erfindungsgemäße Verfahren so aufgebaut sein, daß generell lediglich eine dieser vier Teilabfragen implementiert ist oder aber daß ein Teil dieser Teilabfragen implementiert ist oder aber daß alle Teilabfragen implementiert sind.

In einer ersten Teilabfrage wird ermittelt, ob der aktuelle Wert der Größe rixj größer als ein erster Schwellenwert S3a ist. Der erste Schwellenwert S3a soll dabei den Radius des unbelasteten Rades darstellen. Mit Hilfe dieser Abfrage wird folglich festgestellt, ob der dynamische Rollradius eines Rades des Fahrzeuges aufgrund der Kipptendenz des Fahrzeuges größer als der eines unbelasteten Rades ist. Mit dieser Abfrage wird festgestellt, ob bei einer Kurvenfahrt die kurveninneren Räder abzuheben drohen. Die erste Teilabfrage enthält eine weitere Abfrage, mit der festgestellt wird, ob der aktuelle Wert der Größe rixj kleiner als ein zweiter Schwellenwert S3b ist. Mit dieser Abfrage werden Räder erfaßt, die sich auf der Kurvenaußenseite befinden, und die aufgrund einer Kipptendenz des Fahrzeuges stark zusammengedrückt werden. Mit Hilfe der ersten Teilabfrage wird somit die absolute Größe des dynamischen Rollradius zur Erkennung der Kipptendenz des Fahrzeuges mit entsprechenden Schwellenwerten verglichen. Eine Kipptendenz des Fahrzeuges liegt dann vor, wenn entweder der dynamische Rollradius eines kurveninneren Rades größer als der Schwellenwert S3a ist oder wenn der dynamische Rollradius eines kurvenäußeren Rades kleiner als der Schwellenwert S3b ist.

In einer zweiten Teilabfrage wird festgestellt, ob der Betrag der Differenz deltarixj größer als ein dritter Schwellenwert S3c ist. Mit dieser Abfrage wird die relative Änderung des dynamischen Rollradius, die sich bei einer Kurvenfahrt ausgehend von einer Geradeausfahrt ergibt, zur Erkennung, ob eine Kipptendenz des Fahrzeuges vorliegt, ausgewertet. Eine Kipptendenz des Fahrzeuges liegt dann vor, wenn der Betrag der Differenz größer als der entsprechende Schwellenwert S3c ist.

In einer dritten Teilabfrage wird festgestellt, ob der Betrag der Größe rixjpunkt, die den zeitlichen Verlauf der das Radverhalten quantitativ beschreibenden Größe rixj beschreibt, kleiner als ein vierter Schwellenwert S3d ist. Eine Kipptendenz des Fahrzeuges liegt dann vor, wenn der Betrag der den zeitlichen Verlauf beschreibenden Größe kleiner als der vierte Schwellenwert S3d ist.

In einer vierten Teilabfrage wird festgestellt, ob der Betrag der den Neigungswinkel einer Radachse beschreibenden Größe alphaix größer als ein fünfter Schwellenwert S3e ist. Eine Kipptendenz des Fahrzeuges liegt dann vor, wenn der Betrag der Größe alphaix größer als der Schwellenwert S3e ist.

Mit Hilfe der im Schritt 306 ablaufenden Teilabfragen wird die Kipptendenz eines Fahrzeuges um eine in Längsrichtung des Fahrzeuges orientierte Fahrzeugachse dann erkannt, wenn wenigstens eine der vier Teilabfragen erfüllt ist. Ist im Schritt 306 wenigstens eine der Teilabfragen erfüllt, d.h., liegt eine Kipptendenz des Fahrzeuges vor, so wird im Anschluß an den Schritt 306 ein Schritt 307 ausgeführt. Die bei Vorliegen einer Kipptendenz im Block 206 stattfindende Ausgabe der Größe KT ist in Figur 3 nicht dargestellt. Ist dagegen im Schritt 306 keine der Teilabfragen erfüllt, d.h., liegt keine Kipptendenz des Fahrzeuges vor, so wird im Anschluß an den Schritt 306 erneut der Schritt 301 ausgeführt.

Im Schritt 307 werden wie im Zusammenhang mit der Figur bereits angedeutet, entsprechende Bremseneingriffe und/oder Motoreingriffe und/oder Fahrwerkseingriffe durchgeführt, um ein Kippen des Fahrzeuges um eine in Längsrichtung des Fahrzeuges orientierte Fahrzeugachse zu vermeiden. An dieser Stelle sei bemerkt, daß die im Schritt 307 dargestellten Eingriffe, ausgehend vom Fahrzeugregler in Verbindung mit der Ansteuerlogik dann ausgeführt werden, wenn dem Fahrzeugregler durch die Größen KT mitgeteilt wird, daß eine Kipptendenz des Fahrzeuges um eine in Längsrichtung des Fahrzeuges orientierte Fahrzeugachse vorliegt.

Wird im Schritt 303 festgestellt, daß der Betrag der Größe lambdaixj größer als der entsprechende Schwellenwert S2 ist, so kann die erste Erkennungsstrategie nicht angewandt werden, da aufgrund der zu großen Schlupfwerte und der dadurch entstehenden Fehler bei der Ermittlung der das Radverhalten quantitativ beschreibenden Größen rixj im Schritt 306 Fehlentscheidungen entstehen würden. Deshalb wird, wenn der Betrag der Größe lambdaixj größer als der Schwellenwert S2 ist, im Anschluß an den Schritt 303 ein Schritt 308 ausgeführt, mit dem eine zweite Erkennungsstrategie eingeleitet wird. Diese zweite Erkennungsstrategie wird in Abhängigkeit von der für wenigstens ein Rad in einem vorigen Zeitschritt ermittelten Größe, die das Radverhalten quantitativ beschreibt, durchgeführt. Im Schritt 308 wird eine die Schwerpunktshöhe des Fahrzeuges beschreibende Größe hsix, die insbesondere eine achsbezogene Schwerpunktshöhe darstellt, bereitgestellt. Hierzu wird beispielsweise die Größe hsix, die für einen vorigen Zeitschritt, bei dem die im Schritt 303 stattfindende Abfrage erfüllt war, und die zwischengespeichert war, eingelesen. Alternativ kann die Größe hsix in Abhängigkeit der Größen rixj, die für einen vorigen Zeitschritt, bei dem die im Schritt 303 stattfindende Abfrage erfüllt war, und die zwischengespeichert waren, ermittelt werden. Die achsbezogene Schwerpunktshöhe hsix wird allgemein gemäß der Gleichung

$$hsix = \frac{C \cdot a^2}{mlix \cdot aq} \cdot alphaix$$

ermittelt. In vorstehender Gleichung repräsentiert die Größe C die resultierende vertikale Steifigkeit der der Radachse zugeordneten Räder, die Größe a entspricht der halben Spurweite der Radachse, die Größe alphaix entspricht dem Neigungswinkel der Radachse gegenüber der Fahrbahn, die Größe mlix entspricht der auf die Radachse wirkenden Last und die Größe aq entspricht der auf das Fahrzeug wirkenden Querbeschleunigung. Dabei werden die Größen mlix, aq sowie alphaix beispielsweise des Zeitschrittes verwendet, zu dem die im Schritt 303 stattfindende Abfrage noch erfüllt war. Dies bedeutet in diesem Fall, daß die Größe mlix, die Größe aq sowie die Größe alphaix oder die für die Ermittlung der Größe alphaix erforderlichen Größen rixj laufend in einem Zwischenspeicher abgelegt werden müssen. Im Anschluß an den Schritt 308 wird ein Schritt 309 ausgeführt.

Im Schritt 309 wird in bekannter Weise, ausgehend von der die Schwerpunktshöhe des Fahrzeuges beschreibenden Größe hsix ein Geschwindigkeitsgrenzwert für die Kurvenfahrt des Fahrzeuges ermittelt. Der Geschwindigkeitsgrenzwert gibt die Geschwindigkeit für das Fahrzeug an, bei dem ein Kippen des Fahrzeuges um eine in Längsrichtung des Fahrzeuges orientierte Fahrzeugachse nicht zu erwarten ist. Bzgl. der Ermittlung des Geschwindigkeitsgrenzwertes in Abhängigkeit der die Schwerpunktshöhe des Fahrzeuges sei beispielsweise auf die im "Kraftfahrtechnischen Taschenbuch", VDI-Verlag, 21. Auflage, auf Seite 346 stehende Formel verwiesen. Im Anschluß an den Schritt 309 wird ein Schritt 310 ausgeführt. Im Schritt 310 wird festgestellt, ob der Betrag der Differenz, die aus der Fahrzeuggeschwindigkeit und dem Geschwindigkeitsgrenzwert gebildet wird, kleiner gleich einem Schwellenwert S4 ist. Ist der Betrag der Differenz kleiner gleich dem Schwellenwert S4, so liegt eine Kipptendenz des Fahrzeuges um eine in Längsrichtung des Fahrzeuges orientierte Fahrzeugachse vor, und im Anschluß an den Schritt 310 wird der Schritt 307 ausgeführt. Ist dagegen der Betrag der Differenz größer als der Schwellenwert s4, was gleichbedeutend damit ist, daß eine Kipptendenz des Fahrzeuges nicht vorliegt, so wird anschließend an den Schritt 310 der Schritt 301 ausgeführt.

Dadurch daß in der Figur 3 lediglich auf ein einteiliges Fahrzeug eingegangen wird, soll keine Einschränkung der erfindungswesentlichen Idee entstehen. Das in Figur 3 dargestellte Ablaufdiagramm ist in entsprechender Weise auch für eine Fahrzeugkombination anwendbar.

An dieser Stelle soll nochmals festgehalten werden, daß unter dem Begriff Erkennungsstrategie, die an einen Fahrzustand des Fahrzeuges angepaßte Durchführung, wenigstens einer Plausibilitätsabfrage, zur Erkennung einer Kipptendenz eines Fahrzeuges um eine in Längsrichtung des Fahrzeuges orientierte Fahrzeugachse, verstanden werden soll. Hierzu können beispielsweise, je nach Fahrzustand, unterschiedliche Plausibilitätsabfragen durchgeführt werden, oder unterschiedliche Eingangsgrößen für die Plausibilitätsabfragen verwendet werden.

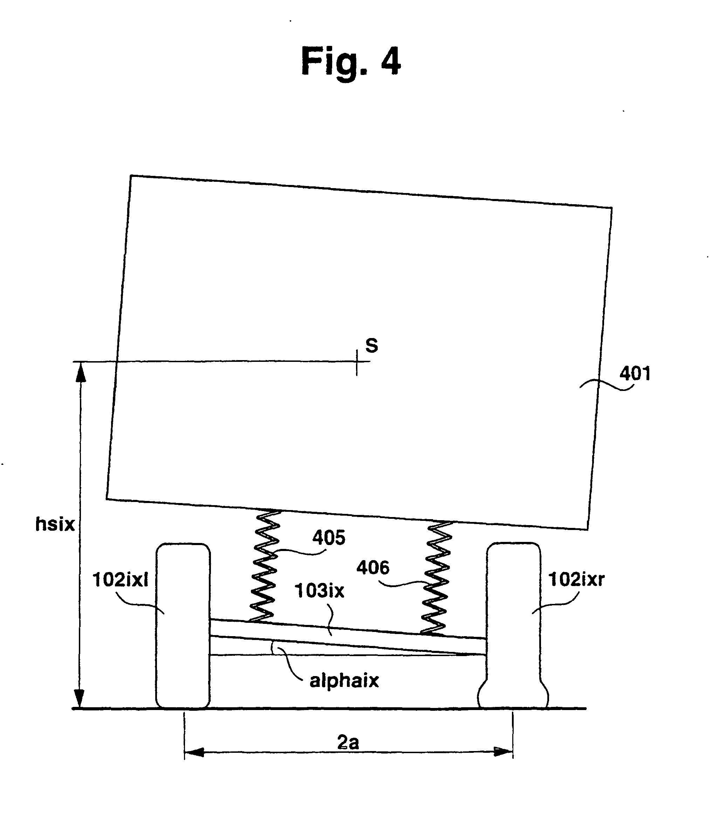

Mit Hilfe von Figur 4 soll abschließend der dem erfindungsgemäßen Verfahren zugrundeliegende physikalische Sachverhalt dargestellt werden. In Figur 4 ist ein einteiliges Fahrzeug, wie es in Figur 1a dargestellt ist, schematisch dargestellt. Dies soll jedoch keine Einschränkung darstellen.

In Figur 4 ist eine Radachse 103ix mit den zugehörigen Rädern 102ixl bzw. 102ixr dargestellt. Ferner ist der mittels Aufhängungsvorrichtungen 405 bzw. 406 mit der Radachse 103ix verbundene Fahrzeugaufbau 401 dargestellt. In Figur 4 ist die Spurweite 2a des Fahrzeuges eingezeichnet. Ferner ist der achsbezogene Schwerpunkt S und die zugehörige achsbezogene Schwerpunktshöhe hsix eingezeichnet. Ebenso ist der Neigungswinkel alphaix der Radachse gegenüber dem Fahrbahnuntergrund eingezeichnet. Für das Fahrzeug liegt eine Kurvenfahrt nach links vor.

Wie Figur 4 zeigt, entstehen bei einer Kurvenfahrt Lastverlagerungen, das kurveninnere Rad 102ixl wird entlastet und kann in Extremsituationen den Bodenkontakt verlieren. Dabei ist es unerheblich, ob die Kurvenfahrt auf einer ebenen oder auf einer geneigten Fahrbahn stattfindet. Das kurvenäußere Rad 102ixr wird stärker belastet. Durch diese Lastverlagerung an den einzelnen Rädern ändert sich der jeweilige dynamische Rollradius rixj. Diese Änderungen lassen sich folglich zur Erkennung eines abhebenden Rades verwenden, was wiederum zur Erkennung der Kipptendenz des Fahrzeuges um eine in Längsrichtung des Fahrzeuges orientierte Fahrzeugachse verwendet werden kann.

Abschließend sei bemerkt, daß die in der Beschreibung gewählte Form des Ausführungsbeispiels sowie die in den Figuren gewählte Darstellung keine einschränkende Wirkung auf die erfindungswesentliche Idee darstellen soll.

**Patentansprüche**

1. Verfahren zur Erkennung einer Kipptendenz eines Fahrzeuges um eine in Längsrichtung des Fahrzeuges orientierte Fahrzeugachse,

   - bei dem eine die Längsdynamik des Fahrzeuges beschreibende Größe ermittelt wird, **dadurch gekennzeichnet,**
   - **dass** die zur Erkennung einer Kipptendenz des Fahrzeuges um eine in Längsrichtung des Fahrzeuges orientierte Fahrzeugachse verwendete Erkennungsstrategie wenigstens in Abhängigkeit der die Längsdynamik des Fahrzeuges beschreibenden Größe aus wenigstens zwei Erkennungsstrategien, wobei in beide eine Änderung des dynamischen Rollradius wenigstens eines Rades eingehen, ausgewählt wird, und/oder
   - **dass** die zur Erkennung einer Kipptendenz des Fahrzeuges um eine in Längsrichtung des Fahrzeuges orientierte Fahrzeugachse verwendete Erkennungsstrategie, in welche die Änderung des dynamischen Rollradius des wenigstens eines Rades eingeht, wenigstens in Abhängigkeit der die Längsdynamik des Fahrzeuges beschreibenden Größe an die jeweils vorliegende Längsdynamik des Fahrzeuges angepaßt wird.

2. Verfahren nach Anspruch 1, **dadurch gekennzeichnet,** **daß** das Verfahren zur Erkennung einer Kipptendenz des Fahrzeuges um eine in Längsrichtung des Fahrzeuges orientierte Fahrzeugachse, im Rahmen eines Verfahrens zur Stabilisierung des Fahrzeuges, insbesondere im Rahmen eines Verfahrens zur Urnkippvermeidung des Fahrzeuges, eingesetzt wird, und **daß** bei Vorliegen einer Kipptendenz des Fahrzeuges um eine in Längsrichtung des Fahrzeuges orientierte Fahrzeugachse, zur Stabilisierung des Fahrzeuges, insbesondere zur Vermeidung des Umkippens des Fahrzeuges, wenigstens Bremseneingriffe an wenigstens einem Rad und/oder Motoreingriffe und/oder Eingriffe an Fahrwerksaktuatoren durchgeführt werden.

3. Verfahren nach Anspruch 1, **dadurch gekennzeichnet,** **daß** für wenigstens ein Rad eine die Drehbewegung des entsprechenden Rades beschreibende Größe; insbesondere eine die Raddrehzahl des entsprechenden Rades beschreibende Größe, ermittelt wird, und **daß** die die Längsdynamik des Fahrzeuges beschreibende Größe, insbesondere entspricht diese dem für wenigstens ein Rad ermittelten an diesem Rad vorherrschenden Antriebsund/oder Bremsschlupf, wenigstens in Abhängigkeit der für wenigstens ein Rad ermittelten Größe, die die Drehbewegung des entsprechenden Rades beschreibt, ermittelt wird, und/oder **daß** die Erkennung einer Kipptendenz des Fahrzeuges um eine in Längsrichtung des Fahrzeuges orientierte Fahrzeugachse wenigstens in Abhängigkeit der für wenigstens ein Rad ermittelten Größe, die die Drehbewegung des entsprechenden Rades beschreibt, durchgerührt wird.

4. Verfahren nach Anspruch 1, **dadurch gekennzeichnet,** **daß** der Betrag der Größe, die die Längsdynamik des Fahrzeuges beschreibt, mit wenigstens einem entsprechenden Schwellenwert verglichen wird, und in Abhängigkeit dieses Vergleichs die verwendete Erkennungsstrategie ausgewählt und/oder angepaßt wird.

5. Verfahren nach Anspruch 1, **dadurch gekennzeichnet,** **daß** für wenigstens ein Rad eine das Radverhalten beschreibende Größe, insbesondere eine den Durchmesser oder den Radius des jeweiligen Rades beschreibende Größe, ermittelt wird, und **daß** wenigstens eine der wenigstens zwei Erkennungsstrategien wenigstens in Abhängigkeit der für wenigstens ein Rad ermittelten Größe, die das Radverhalten des jeweiligen Rades beschreibt, durchgeführt wird, insbesondere wird die das Radverhalten des Rades beschreibende Größe wenigstens in Abhängigkeit einer die Raddrehzahl des entsprechenden Rades beschreibenden Größe, einer die Fahrzeuggeschwindigkeit beschreibenden Größe, einer die Querdynamik des Fahrzeugs beschreibenden Größe und einer die Geometrie des Fahrzeuges beschreibenden Größe ermittelt.

6. Verfahren nach Anspruch 5, **dadurch gekennzeichnet,** **daß** der Betrag der Größe, die die Längsdynamik des Fahrzeuges beschreibt, mit wenigstens einem entsprechenden Schwellenwert verglichen wird, und **daß** eine erste der wenigstens zwei Erkennungsstrategien dann ausgeführt wird, wenn der Betrag der Größe, die die Längsdynamik des Fahrzeuges beschreibt, kleiner als der wenigstens eine entsprechende Schwellenwert ist, wobei die erste Erkennungsstrategie wenigstens in Abhängigkeit von der für das wenigstens eine Rad im aktuellen Zeitschritt ermittelten Größe, die das Radverhalten beschreibt, durchgeführt wird, und/oder **daß** eine zweite der wenigstens zwei Erkennungsstrategien dann ausgeführt wird, wenn der Betrag der Größe, die die Längsdynamik des Fahrzeuges beschreibt, größer als der wenigstens eine entsprechende Schwellenwert ist, wobei die zweite Erkennungsstrategie wenigstens in Abhängigkeit von der für das wenigstens eine Rad in einem vorigen Zeitschritt ermittelten Größe, die das Radverhalten beschreibt, durchgeführt wird.

7. Verfahren nach Anspruch 5, **dadurch gekennzeichnet,**
   **daß** gemäß einer ersten der wenigstens zwei Erkennungsstrategien für ein Fahrzeug eine Kipptendenz um eine in Längsrichtung des Fahrzeuges orientierte Fahrzeugachse dann vorliegt,

   - wenn für wenigstens ein Rad der Wert der Größe, die das Radverhalten quantitativ beschreibt, größer als ein erster Schwellenwert ist, oder wenn für wenigstens ein Rad der Wert der Größe, die das Radverhalten quantitativ beschreibt, kleiner als ein zweiter Schwellenwert ist, und/oder
   - wenn für wenigstens ein Rad der Betrag einer Differenz, die aus dem Wert der Größe, die das Radverhalten quantitativ beschreibt; und einem Vergleichswert gebildet wird, größer als ein entsprechender Schwellenwert ist, und/oder
   - wenn für wenigstens ein Rad der Betrag einer Größe, die den zeitlichen Verlauf der das Radverhalten quantitativ beschreibenden Größe beschreibt, kleiner als ein entsprechender Schwellenwert ist, und/oder
   - wenn der Betrag einer den Neigungswinkel einer Radachse beschreibenden Größe größer als ein entsprechender Schwellenwert ist,

   wobei für die Räder der entsprechenden Radachse jeweils die das Radverhalten quantitativ beschreibenden Größen ermittelt werden; und in Abhängigkeit dieser Größen die den Neigungswinkel der Radachse beschreibende Größe ermittelt wird, und/oder
   **daß** gemäß einer zweiten der wenigstens zwei Erkennungsstrategien für ein Fahrzeug eine Kipptendenz um eine in Längsrichtung des Fahrzeuges orientierte Fahrzeugachse
   dann vorliegt, wenn der Betrag einer Differenz, die aus einer die Fahrzeuggeschwindigkeit beschreibenden Größe und einem Geschwindigkeitsgrenzwert gebildet wird, kleiner als ein entsprechender Schwellenwert ist,
   insbesondere wird hierzu der Geschwindigkeitsgrenzwert wenigstens in Abhängigkeit einer die Schwerpunktshöhe des Fahrzeuges beschreibenden Größe ermittelt, wobei diese die Schwerpunktshöhe des Fahrzeuges beschreibende Größe wenigstens in Abhängigkeit der für wenigstens ein Rad ermittelten Größe, die das Radverhalten quantitativ beschreibt, ermittelt wird.

8. Verfahren nach Anspruch 1, **dadurch gekennzeichnet,**
   **daß** eine die Querdynamik des Fahrzeuges repräsentierende Größe, insbesondere eine die Querbeschleunigung und/oder eine die Gierrate des Fahrzeuges beschreibende Größe, ermittelt wird, und
   **daß** die Erkennung, ob eine Kipptendenz des Fahrzeuges um eine in Längsrichtung des Fahrzeuges orientierte Fahrzeugachse vorliegt, dann ausgeführt wird, wenn der Betrag der die Querdynamik des Fahrzeuges repräsentierenden Größe größer als ein entsprechender Schwellenwert ist.

9. Verfahren nach Anspruch 1, **dadurch gekennzeichnet,**
   **daß** zur Durchführung der verwendeten Erkennungsstrategie Eingangsgrößen, insbesondere das Radverhalten beschreibende Größen, erforderlich sind, und
   **daß** die verwendete Erkennungsstrategie mit Hilfe von Plausibilitätsabfragen durchgeführt wird, und
   **daß** die verwendete Erkennungsstrategie an die jeweils vorliegende Längsdynamik des Fahrzeuges dadurch angepaßt wird,
   **daß** als Eingangsgrößen, die für die Durchführung der verwendeten Erkennungsstrategie erforderlich sind, in Abhängigkeit der vorliegenden Längsdynamik des Fahrzeuges verschiedene Eingangsgrößen auswählbar sind, und/oder
   **daß** die in der verwendeten Erkennungsstrategie durchgeführten Plausibilitätsabfragen in Abhängigkeit der vorliegenden Längsdynamik des Fahrzeuges veränderbar sind.

10. Vorrichtung zur Erkennung einer Kipptendenz eines Fahrzeuges um eine in Längsrichtung des Fahrzeuges orientierte Fahrzeugachse,

    - die erste Mittel enthält, mit denen eine die Längsdynamik des Fahrzeuges beschreibende Größe ermittelt wird,

    **dadurch gekennzeichnet, dass** zweite Mittel enthalten sind,

    - mit denen die zur Erkennung einer Kipptendenz des Fahrzeuges um eine in Längsrichtung des Fahrzeuges orientierte Fahrzeugachse verwendete Erkennungsstrategie wenigstens in Abhängigkeit der mit den ersten Mitteln ermittelten Größe, die die Längsdynamik des Fahrzeuges beschreibt, aus wenigstens zwei Erkennungsstrategien, wobei in beide eine Änderung des dynamische Rollradius wenigstens eines Rades eingehen, ausgewählt

- und/oder mit denen die zur Erkennung einer Kipptendenz des Fahrzeuges um eine in Längsrichtung des Fahrzeuges orientierte Fahrzeugachse verwendete Erkennungsstrategie, in welche die Änderung des dynamische Rollradius des wenigstens eines Rades eingeht, wenigstens in Abhängigkeit der mit den ersten Mitteln ermittelten Größe, die die Längsdynamik des Fahrzeuges beschreibt, an die jeweils vorliegende Längsdynamik des Fahrzeuges angepaßt wird.

11. Vorrichtung nach Anspruch 10, **dadurch gekennzeichnet,**

    **daß** die Vorrichtung zur Erkennung einer Kipptendenz des Fahrzeuges um eine in Längsrichtung des Fahrzeuges orientierte Fahrzeugachse, in einer Vorrichtung zur Stabilisierung des Fahrzeuges, insbesondere in einer Vorrichtung zur Umkippvermeidung des Fahrzeuges, eingesetzt wird, und

    **daß** bei Vorliegen einer Kipptendenz des Fahrzeuges um eine in Längsrichtung des Fahrzeuges orientierte Fahrzeugachse, zur Stabilisierung des Fahrzeuges, insbesondere zur Vermeidung des Umkippens des Fahrzeuges, wenigstens an wenigstens einem Rad die diesem Rad zugeordneten Aktuatoren zur Erzeugung einer Bremskraft und/oder ein Mittel zur Beeinflussung des Motormoments und/oder Fahrwerkaktuatoren betätigt werden.

## Claims

1. Method for detecting a tendency of a vehicle to tilt about a vehicle axis oriented in the longitudinal direction of the vehicle,

    - in which a variable which describes the longitudinal dynamics of the vehicle is determined,

    **characterized**

    - **in that** the detection strategy which is used to detect a tendency of the vehicle to tilt about a vehicle axis oriented in the longitudinal direction of the vehicle is selected at least as a function of the variable describing the longitudinal dynamics of the vehicle, from at least two detection strategies,
    - the change in the dynamic rolling radius of the at least one wheel being included in one of the detection strategies, and
    - a variable describing the height of the centre of gravity of the vehicle being included in a further detection strategy, and/or
    - **in that** the detection strategy which is used to detect a tendency of the vehicle to tilt about a vehicle axis oriented in the longitudinal direction of the vehicle, in which the change in the dynamic rolling radius of the at least one wheel is included, is adapted to the respectively present longitudinal dynamics of the vehicle at least as a function of the variable describing the longitudinal dynamics of the vehicle.

2. Method according to Claim 1, **characterized in that** the method for detecting a tendency of the vehicle to tilt about a vehicle axis oriented in the longitudinal direction of the vehicle is used within the scope of a method for stabilizing the vehicle, in particular within the scope of a method for avoiding tipping over of the vehicle, and **in that**, when a tendency of the vehicle to tilt about a vehicle axis oriented in the longitudinal direction of the vehicle is present, at least braking interventions are carried out at at least one wheel and/or engine interventions and/or interventions at bodywork actuators are carried out in order to stabilize the vehicle, in particular in order to avoid tipping over of the vehicle.

3. Method according to Claim 1, **characterized in that**, for at least one wheel, a variable describing the rotational movement of the respective wheel, in particular a variable describing the wheel speed of the respective wheel, is determined, and **in that**, in particular the variable describing the longitudinal dynamics of the vehicle corresponds to the drive slip and/or brake slip which is determined for at least one wheel and is present at this wheel, said variable is determined at least as a function of the variable which is determined for at least one wheel and which describes the rotational movement of the respective wheel, and/or **in that** the detection of a tendency of the vehicle to tilt about a vehicle axis oriented in the longitudinal direction of the vehicle is carried out at least as a function of the variable which is determined for at least one wheel and which describes the rotational movement of the respective wheel.

4. Method according to Claim 1, **characterized in that** the absolute value of the variable which describes the longitudinal dynamics of the vehicle is compared with at least one respective threshold value and the detection strategy which is used is selected and/or adapted as a function of this comparison.

5. Method according to Claim 1, **characterized in that**, for at least one wheel, a variable which describes the wheel behaviour, in particular a variable which describes the diameter or the radius of the respective wheel is determined, and **in that** at least one of the at least two detection strategies is carried out at least as a function of the variable which is determined for at least one wheel and which describes the wheel behaviour of the respective wheel, in particular the variable which describes the wheel behaviour of the wheel is determined at least as a function of a variable which describes the wheel speed of the respective wheel, a variable which describes the velocity of the vehicle, a variable which describes the lateral dynamics of the vehicle and a variable which describes the geometry of the vehicle.

6. Method according to Claim 5, **characterized in that** the absolute value of the variable which describes the longitudinal dynamics of the vehicle is compared with at least one respective threshold value, and **in that** a first of the at least two detection strategies is executed if the absolute value of the variable which describes the longitudinal dynamics of the vehicle is smaller than the at least one respective threshold value, the first detection strategy being carried out at least as a function of the variable which is determined for the at least one wheel in the current time step and which describes the wheel behaviour, and/or **in that** a second of the at least two detection strategies is executed if the absolute value of the variable which describes the longitudinal dynamics of the vehicle is greater than the at least one respective threshold value, the second detection strategy being carried out at least as a function of the variable which is determined for the at least one wheel in a previous time step and which describes the wheel behaviour.

7. Method according to Claim 5, **characterized in that**, according to a first of the at least two detection strategies for a vehicle, a tendency to tilt about a vehicle axis oriented in the longitudinal direction of the vehicle is present

   - if, for at least one wheel, the value of the variable which describes the wheel behaviour quantitatively is larger than a first threshold value, or
   - if, for at least one wheel, the value of the variable which describes the wheel behaviour quantitatively is smaller than a second threshold value, and/or
   - if, for at least one wheel, the absolute value of a difference which is formed from the value of the variable which describes the wheel behaviour quantitatively and from a comparison value is greater than a respective threshold value, and/or
   - if, for at least one wheel, the absolute value of a variable which describes the time profile of the variable which describes the wheel behaviour quantitatively is smaller than a respective threshold value, and/or
   - if the absolute value of a variable which describes the angle of inclination of a wheel axle is greater than a respective threshold value,

the variables which describe the wheel behaviour quantitatively being determined in each case for the wheels of the respective wheel axle, and the variable which describes the angle of inclination of the wheel axle being determined as a function of these variables, and/or
**in that**, according to a second of the at least two detection strategies for a vehicle, a tendency to tilt about a vehicle axis oriented in the longitudinal direction of the vehicle is present if the absolute value of a difference which is formed from a variable which describes the velocity of the vehicle and a velocity limiting value is smaller than a respective threshold value,
in particular, for this purpose, the velocity limiting value is determined at least as a function of a variable which describes the height of the centre of gravity of the vehicle, this variable which describes the height of the centre of gravity of the vehicle being determined at least as a function of the variable which is determined for at least one wheel and which describes the wheel behaviour quantitatively.

8. Method according to Claim 1, **characterized in that** a variable which represents the lateral dynamics of the vehicle, in particular a variable which describes the lateral acceleration and/or a variable which describes the yaw rate of the vehicle, is determined and
**in that** the detection as to whether a tendency of the vehicle to tilt about a vehicle axis oriented in the longitudinal direction of the vehicle is present is executed if the absolute value of the variable which represents the lateral dynamics of the vehicle is greater than a respective threshold value.

9. Method according to Claim 1, **characterized in that**, in order to carry out the detection strategy which is used, input variables, in particular variables describing the wheel behaviour, are necessary, and **in that** the detection strategy which is used is carried out using plausibility interrogations, and **in that** the detection strategy which is used is adapted to the respectively present longitudinal dynamics of the vehicle by virtue of the fact that different input variables can be selected, as a function of the present longitudinal dynamics of the vehicle, as input variables which are necessary for carrying out the detection strategy used, and/or **in that** the plausibility interrogations which are carried out in the detection strategy which is used can be varied as a function of the present longitudinal dynamics of the vehicle.

10. Device for detecting a tendency of a vehicle to tilt about a vehicle axis oriented in the longitudinal direction of the vehicle,

- which contains first means with which a variable which describes the longitudinal dynamics of the vehicle is determined,

**characterized in that** it contains second means

- with which the detection strategy which is used to detect a tendency of the vehicle to tilt about a vehicle axis oriented in the longitudinal direction of the vehicle is selected at least as a function of the variable which is determined with the first means and which describes the longitudinal dynamics of the vehicle, from at least two detection strategies,
- the change in the dynamic rolling radius of the at least one wheel being included in one of the detection strategies, and
- a variable which describes the height of the centre of gravity of the vehicle being included in a further detection strategy, and/or
- with which the detection strategy which is used to detect a tendency of the vehicle to tilt about a vehicle axis oriented in the longitudinal direction of the vehicle and in which the change in the dynamic rolling radius of the at least one wheel is included is adapted to the respectively present longitudinal dynamics of the vehicle at least as a function of the variable which is detected with the first means and which describes the longitudinal dynamics of the vehicle.

11. Device according to Claim 10, **characterized in that** the device for detecting a tendency of the vehicle to tilt about a vehicle axis oriented in the longitudinal direction of the vehicle is used in a device for stabilizing the vehicle, in particular in a device for avoiding tipping over of the vehicle, and **in that**, in order to stabilize the vehicle, in particular to avoid tipping over of the vehicle, at least at at least one wheel, when a tendency of the vehicle to tilt about a vehicle axis oriented in the longitudinal direction of the vehicle is present, the actuators assigned to this wheel are activated in order to generate a braking force and/or a means for influencing the engine torque and/or bodywork actuators are activated.

**Revendications**

1. Procédé pour détecter la tendance au basculement d'un véhicule autour d'un axe du véhicule orienté dans la direction longitudinale du véhicule,

- dans lequel on détecte une grandeur décrivant la dynamique longitudinale du véhicule,

**caractérisé en ce que**

- on sélectionne, parmi au moins deux stratégies de détection, la stratégie de détection utilisée pour détecter une tendance au basculement du véhicule autour d'un axe du véhicule orienté dans la direction longitudinale du véhicule, au moins en fonction de la grandeur décrivant la dynamique longitudinale du véhicule,
- la variation du rayon de roulement dynamique de la au moins une roue intervenant dans une des stratégies de détection, et
- une grandeur décrivant la hauteur du centre de gravité du véhicule intervient dans une autre stratégie de détection, et/ou
- la stratégie de détection utilisée pour détecter la tendance au basculement du véhicule autour d'un axe du véhicule orienté dans la direction longitudinale du véhicule, dans laquelle intervient la variation du rayon de roulement dynamique de la au moins une roue, est adaptée à la dynamique longitudinale respectivement présente du véhicule au moins en fonction de la grandeur décrivant la dynamique longitudinale du véhicule.

2. Procédé selon la revendication 1,
**caractérisé en ce que**
le procédé est utilisé pour détecter une tendance au basculement du véhicule autour d'un axe du véhicule orienté dans la direction longitudinale du véhicule dans le cadre d'un procédé pour stabiliser le véhicule, en particulier dans le cadre d'un procédé pour éviter le basculement du véhicule, et en présence d'une tendance au basculement du véhicule autour d'un axe du véhicule orienté dans la direction longitudinale du véhicule, on effectue au moins des interventions de freinage sur au moins une roue et/ou des interventions au moteur et/ou des interventions à des actionneurs du châssis en vue de la stabilisation du véhicule, en particulier pour éviter le basculement du véhicule.

3. Procédé selon la revendication 1,
**caractérisé en ce que**
pour au moins une roue on détecte une grandeur décrivant le mouvement de rotation de la roue correspondante, en particulier une grandeur décrivant la vitesse de rotation de la roue correspondante, et on détecte la grandeur décrivant la dynamique longitudinale du véhicule, celle-ci correspond en particulier au glissement d'entraînement et/ou de freinage déterminé pour au moins une roue et régnant à cette roue, au moins en fonction de la grandeur déterminée pour au moins une roue, qui décrit le mouvement de rotation de la roue correspondante, et/ou on effectue la détection d'une tendance au basculement du véhicule autour d'un axe du véhicule orienté dans la direction longitudinale du véhicule au moins en fonction de la grandeur déterminée pour au moins une roue, qui décrit le mouvement de rotation de la roue correspondante.

4. Procédé selon la revendication 1,
**caractérisé en ce que**
la valeur de la grandeur, qui décrit la dynamique longitudinale du véhicule, est comparée à au moins une valeur de seuil, et on sélectionne et/ou on adapte la stratégie de détection utilisée en fonction de cette comparaison.

5. Procédé selon la revendication 1,
**caractérisé en ce que**
pour au moins une roue on détecte une grandeur décrivant le comportement de la roue, en particulier une grandeur décrivant le diamètre ou le rayon de la roue respective, et on exécute au moins une des au moins deux stratégies de détection au moins en fonction de la grandeur détectée pour au moins une roue, qui décrit le comportement de la roue respective, en particulier on détermine la grandeur décrivant le comportement de la roue au moins en fonction d'une grandeur décrivant la vitesse de rotation de la roue correspondante, d'une grandeur décrivant la vitesse du véhicule, d'une grandeur décrivant la dynamique transversale du véhicule et d'une grandeur décrivant la géométrie du véhicule.

6. Procédé selon la revendication 5,
**caractérisé en ce que**
la valeur de la grandeur qui décrit la dynamique longitudinale du véhicule est comparée à au moins une valeur de seuil correspondante, et on exécute alors une première des au moins deux stratégies de détection, lorsque la valeur de la grandeur, qui décrit la dynamique longitudinale du véhicule, est inférieure à la au moins une valeur de seuil correspondante, en exécutant la première stratégie de détection au moins en fonction de la grandeur qui décrit le comportement de la roue, déterminée pour la au moins une roue au cours de l'étape actuelle, et/ou on exécute alors une deuxième des au moins deux stratégies de détection, lorsque la valeur de la grandeur, qui décrit la dynamique longitudinale du véhicule, est supérieure à au moins une valeur de seuil correspondante, en exécutant la deuxième stratégie de détection au moins en fonction de la grandeur qui décrit le comportement de la roue, déterminée pour la au moins une roue au cours d'une étape précédente.

7. Procédé selon la revendication 5,

**caractérisé en ce que**
selon une première des au moins deux stratégies de détection, il existe pour un véhicule une tendance au basculement autour d'un axe du véhicule orienté dans la direction longitudinale du véhicule,

- si pour au moins une roue, la valeur de la grandeur qui décrit quantitativement le comportement de la roue est supérieure à une première valeur de seuil, ou
- si pour au moins une roue, la valeur de la grandeur qui décrit quantitativement le comportement de la roue est inférieure à une deuxième valeur de seuil, et/ou
- si pour au moins une roue, la valeur d'une différence, formée à partir de la valeur d'une grandeur qui décrit quantitativement le comportement de la roue et d'une valeur de comparaison, est supérieure à une valeur de seuil correspondante, et/ou
- si pour au moins une roue, la valeur d'une grandeur qui décrit l'évolution temporelle de la grandeur qui décrit quantitativement le comportement de la roue est inférieure à une valeur de seuil correspondante, et/ou
- si la valeur d'une grandeur qui décrit l'angle d'inclinaison d'un essieu est supérieure à une valeur de seuil correspondante, en déterminant pour chaque roue de l'essieu correspondant les grandeurs décrivant quantitativement le comportement des roues, et en déterminant en fonction de ces grandeurs la grandeur décrivant l'angle d'inclinaison de l'essieu,

et/ou selon une deuxième des au moins deux stratégies de détection, il existe pour un véhicule une tendance au basculement autour d'un axe du véhicule orienté dans la direction longitudinale du véhicule, si la valeur d'une différence formée à partir d'une grandeur décrivant la vitesse du véhicule et d'une valeur limite de la vitesse, est inférieure à une valeur de seuil correspondante, en particulier la valeur limite de la vitesse est déterminée à cet effet au moins en fonction d'une grandeur décrivant la hauteur du centre de gravité du véhicule, cette dernière grandeur étant déterminée au moins en fonction de la grandeur déterminée pour au moins une roue, qui décrit quantitativement le comportement de la roue.

8. Procédé selon la revendication 1,
**caractérisé en ce qu'**
on détermine une grandeur représentative de la dynamique transversale du véhicule, en particulier une grandeur décrivant l'accélération transversale et/ou une grandeur décrivant le degré de lacet du véhicule, et
on détecte s'il existe une tendance au basculement du véhicule autour d'un axe du véhicule orienté dans la direction longitudinale du véhicule, si la valeur de la grandeur représentant la dynamique transversale du véhicule est supérieure à une valeur de seuil correspondante.

9. Procédé selon la revendication 1,
   **caractérisé en ce que**
   des grandeurs d'entrée, en particulier des grandeurs décrivant le comportement des roues, sont nécessaires pour l'exécution de la stratégie de détection utilisée, et on exécute la stratégie de détection utilisée à l'aide d'interrogations de plausibilité, et on adapte la stratégie de détection utilisée à la dynamique longitudinale du véhicule respectivement présente par le fait que différentes grandeurs d'entrée peuvent être sélectionnées comme grandeurs d'entrée qui sont nécessaires pour l'exécution de la stratégie de détection utilisée, en fonction de la dynamique longitudinale existante du véhicule, et/ou les interrogations de plausibilité exécutées dans la stratégie de détection utilisée peuvent être modifiées en fonction de la dynamique longitudinale existante du véhicule.

10. Dispositif pour détecter la tendance au basculement d'un véhicule autour d'un axe du véhicule orienté dans la direction longitudinale du véhicule,

    - qui comprend des premiers moyens avec lesquels on détermine une grandeur décrivant la dynamique longitudinale du véhicule,

    **caractérisé par**
    des seconds moyens

    - avec lesquels on sélectionne, parmi au moins deux stratégies de détection, la stratégie de détection utilisée pour détecter une tendance au basculement du véhicule autour d'un axe du véhicule orienté dans la direction longitudinale du véhicule, au moins en fonction de la grandeur, déterminée avec les premiers moyens, qui décrit la dynamique longitudinale du véhicule,
    - la variation du rayon de roulement dynamique d'au moins une roue intervenant dans une des stratégies de détection, et
    - une grandeur décrivant la hauteur du centre de gravité du véhicule intervient dans une autre stratégie de détection,
    et/ou
    - avec lesquels la stratégie de détection utilisée pour détecter la tendance au basculement du véhicule autour d'un axe du véhicule orienté dans la direction longitudinale du véhicule, dans laquelle intervient la variation du rayon de roulement dynamique de la au moins une roue, est adaptée à la dynamique longitudinale respectivement présente du véhicule au moins en fonction de la grandeur, déterminée par les premiers moyens, qui décrit la dynamique longitudinale du véhicule.

11. Dispositif selon la revendication 10,
    **caractérisé en ce que**
    le dispositif pour détecter la tendance au basculement d'un véhicule autour d'un axe du véhicule orienté dans la direction longitudinale du véhicule est utilisé dans un dispositif pour stabiliser le véhicule, en particulier dans un dispositif pour éviter le basculement du véhicule, et en présence d'une tendance au basculement du véhicule autour d'un axe du véhicule orienté dans la direction longitudinale du véhicule, on commande sur au moins une roue au moins les actionneurs associés à cette roue pour produire une force de freinage et/ou un moyen pour influencer le couple du moteur et/ou les actionneurs du châssis, afin de stabiliser le véhicule, en particulier pour éviter le basculement du véhicule.

# Fig. 1a

102v1r    102v2r    102h2r    102h1r

103v1  103v2    103h2  103h1

101

104

102v1l    102v2l    102h2l    102h1l

# Fig. 1b

107vrz    105    107hrz    106    107h2ra    107h1ra

108vz    108hz    108h2a  108h1a

109

107vlz    107hlz    107h2la    107h1la

# Fig. 2

EP 0 975 491 B1

# Fig. 3a

```
┌─────────────────────┐
│ nixj, omega, aq, vf │
│ lambdaixj,mlix      │──── 301
│ einlesen            │
└─────────────────────┘
          │
          ▼
        ╱────────╲
  N    ╱ |aq| > S1a ╲
 ◄────╱     u/o       ╲
     ╲  |omega| > S1b  ╱──── 302
  ⓑ   ╲      ?       ╱
        ╲────────╱
          │ J
          ▼
        ╱────────────╲            N
       ╱ |lambdaixj| < S2 ╲ ──────────────┐
       ╲        ?         ╱                │
   303  ╲────────────╱                     │
          │ J                              ▼
          ▼                      ┌──────────────────┐
   304  ┌─────────────┐          │ hsix eines vorigen│
        │ rixj ermitteln│        │ Zeitschrittes     │──── 308
        └─────────────┘          │ bereitstellen     │
          │                      └──────────────────┘
          ▼                              │
   305  ┌──────────────────┐             ▼
        │ deltarixj,rixjpunkt,│   ┌─────────────┐
        │ alphaix ermitteln  │   │ vg ermitteln │──── 309
        └──────────────────┘     └─────────────┘
          │                              │
          │                              ▼
          │                          ╱────────╲           N
          │                         ╱ |vf - vg|≤ S4 ╲ ────────► ⓑ
          │                         ╲      ?        ╱
          │                          ╲────────╱  310
          ▼                              │ J
         Ⓐ                              ▼
                                        Ⓒ
```

# Fig. 3b

(A)

$$\left( \begin{array}{c} \text{rixj} > \text{S3a} \\ \text{rixj} < \text{S3b} \end{array} \right)$$
und/oder
|deltarixj| > S3c
und/oder
|rixjpunkt| < S3d
und/oder
|alphaix| > S3e
?

N

(B)

306

J

(C)

**Bremseneingriff
und/oder
Motoreingriff
und/oder
Fahrwerkseingriff**

307

(B)

# Fig. 4